# NEW EUROPEAN PATENT SPECIFICATION

(11) **EP 3 283 290 B2**
(45) Date of publication and mention of the opposition decision: **31.07.2024**
(45) Mention of the grant of the patent: 20.02.2019
(21) Application number: 16713946.8
(22) Date of filing: 05.04.2016
(51) Int. Cl.: B32B 7/12, B32B 3/02, B32B 3/04, B32B 5/02, B32B 5/16, B32B 5/18, B32B 15/04, B32B 15/085, B32B 15/14, B32B 15/16, B32B 27/08, B32B 27/30, B32B 27/32, B32B 27/40, F16L 59/065

(54) **VACUUM INSULATION PANEL AND PROCESS OF MANUFACTURE**
VAKUUMISOLIERPLATTE UND VERFAHREN ZUR HERSTELLUNG DAVON
PANNEAU D'ISOLATION SOUS VIDE ET PROCÉDÉ DE FABRICATION

(30) Priority: 14.04.2015 GB 201506336
(43) Date of publication of application: 21.02.2018
(73) Proprietor: Kingspan Holdings (IRL) Limited, Kingscourt County Cavan (IE)
(72) Inventor: MACK, Daniel, Hereford HR1 2DQ (GB); ROCHEFORT, Malcolm, Ludlow SY8 2HP (GB)
(74) Representative: Tomkins & Co
(86) International application number: PCT/EP2016/057435
(87) International publication number: WO 2016/165984

(56) References cited:
- EP-A1- 2 224 159
- EP-A1- 2 842 733
- WO-A2-2011/049304
- WO-A2-2012/026715
- CN-A- 103 759 097
- DE-A4- 102004 050 549
- DE-U1- 202006 002 959
- DE-U1- 202006 002 959
- DE-U1- 29 605 338
- GB-A- 2 336 565
- US-A- 4 662 521
- US-A1- 2003 134 078
- English machine-generated translation of CN 103 759 097 A
- Wikipedia Excerpt keyword "Alufolie"
- Wikipedia Excerpt keyword "Pyrogenes Siliciumdioxid’’
- Technical data sheet "PET-Alu-PE-124 p Film" with handwritten notes
- Affidavit of Dr. R. Caps
- 7th International Vacuum Insulation Symposium, Extract from M. Zimmermann,pages 2 and 146.
- J. Kerry: "Aluminium foil packaging", chapter 9 of the publication by A. Emblem,R.H. Emblem (editors): Packaging Technology, Fundamentals, Materials and Processing", Woodhead Publishing Limited, Cambridge 2021, pp. 163 and 168.
- Affidavit of Dr. P. Caps
- technical datea sheet
- DATABASE WPI Week 201440, Derwent World Patents Index; AN 2014-L81053, XP002758999

## Description

### Field of the Invention

The present invention relates to vacuum insulation panels (VIPs) and methods of manufacture thereof.

### Background to the Invention

VIPs are used in many insulation applications including in insulation of buildings and in other applications such as refrigeration units and the like. Such panels generally have a panel of insulation material which forms an insulation "core" which is enveloped in an envelope. The envelope is evacuated and sealed to provide a vacuum insulation panel.

The core is formed of any suitable material and is typically microporous. For example it may be formed from a particulate matter including powders and fibres and blends thereof. For example it may be formed of particulate silica, for example fumed silica optionally with reinforcing fibres.

Opacifiers, such as infra-red opacifiers can be used within the core.

The core is typically wrapped in a flexible, gas-tight envelope to which a vacuum is applied before sealing.

Thermal conductivity properties of VIPs are typically of the order of about 0.005W/m.K.

GB2336565 describes a VIP comprising an envelope which is in the form of a laminate. The envelope is made up of layers of plastic and has discontinuous layers of aluminium therein. The aluminium layer is sandwiched between the layers of plastic. While GB2336565 endeavours to minimise thermal bridging between the upper surface and lower surface of the core, the aluminium layer of the envelope extends about two sides of the core.

DE202006002959U1 describes a VIP comprising a core surrounded by an envelope, said core being encased between two stainless steel trays. The trays have rounded edges which extend about the sides of the core so as not to perforate the VIP envelope.

All thermal conductivities values referenced herein are those determined under BS EN: 12667:2001 unless expressly indicated otherwise. All thermal conductivity values expressed herein are measured in Watts per meter Kelvin or milliwatts per meter Kelvin.

When referring to the present invention, the term microns is the SI unit micrometres.

All oxygen transmission rate (OTR) values referenced herein are measured according to ASTM D3985 (measured at 23 °C with 50% relative humidity) and all moisture vapour transmission rate (MVTR) values referenced herein are measured according to ASTM F1249-90 (measured at 38 °C with 100% relative humidity).

Notwithstanding the various VIP products that are available it is desirable to provide an alternative construction of VIP; an alternative method of making a VIP and/or a VIP with improved properties.

Some of the considerations that are taken into account when constructing a VIP are ease of manufacture, robustness of handling, availability and cost of materials, initial thermal conductivity, aged thermal conductivity value.

In relation to thermal conductivity there are many factors including the conductivity of the core and the conductivity of the envelope which influence the overall thermal conductivity of a VIP. The thermal conductivity of the core and of the envelope in turn depend on many other factors.

### Summary of the Invention

The present invention provides an alternative VIP and/or alternative process of manufacture of a VIP. In particular the present invention provides a VIP which has better aged thermal conductivity. In particular a VIP of the present invention retains its vacuum over time thus resulting in a better aged thermal conductivity.

In one aspect, the present invention provides a vacuum insulation panel (VIP) as set out in the claims, comprising:
(a) a porous insulating core having an upper surface and a lower surface and sides; wherein the insulating core is constructed from a powder insulating microporous material selected from the group consisting of fumed silica, precipitated silica, perlite, diatomaceous earth or combinations thereof;
(b) an envelope about the core arranged to envelop the core, and to maintain an applied vacuum within the envelope;
(c) at least one metal foil having a thickness of from 4 microns to 50 microns between the envelope and the core and extending across substantially the entire surface of the core on the upper surface or lower surface thereof, wherein the foil does not extend about the sides of the insulating core, the foil does not form a thermal bridge between the upper surface and lower surface of the core; and the envelope comprises an envelope inner layer and the metal foil has at least one outer thermoplastic layer adhered thereto, wherein the envelope inner layer and the outer layer on the metal foil are attached to each other, by heating the panel after the vacuum has been applied; said vacuum insulating panel having a thermal conductivity of from 3.0 mW/ m·K to 4.0 mW/m·K wherein the at least one metal foil is formed of stainless steel. Optionally the envelope inner layer and the outer layer on the metal foil are bonded to each other.

The metal foil improves the permeation rate through the envelope. This means that air ingress into the envelope over time is reduced considerably with consequent improvement in the aged thermal conductivity of the VIP. The applied vacuum is maintained over a longer period of time. Maintenance of the vacuum over time means that the performance of the VIP from a thermal conductivity point of view is maintained for a longer period. This means that the useful lifetime of the VIP is improved.

In particular the present invention provides an envelope for the core which has improved permeation properties. In this context improved permeation is in fact reduced permeation because the lower the permeation the better, from the stand point of maintaining a vacuum within the envelope. Reduced permeation of air into (through) the envelope over time results in an improved VIP performance.

The metal foil having a thickness of at least 4 microns will have a greater thermal conductivity than materials typically used for constructing an envelope. For that reason it is important that a vacuum insulation panel of the invention will be constructed so that there is no thermal bridge formed by the metal foil that allows heat to be conducted past the core by bypassing the insulating core. If the metal foil were to extend beyond the upper surface (about the sides of the panel) and towards the lower surface (or vice versa) then the possibility of forming a thermal bridge increases with the consequent loss in performance in the terms of thermal conductivity. From an insulation standpoint the lower the thermal conductivity of the panel the better.

The core may have a parallelepiped shape, comprising an upper surface, a lower surface and sides. The upper and lower surfaces are of larger surface area than the sides. The upper and lower surfaces are diametrically opposed surfaces. The metal foil is in direct contact with the core. The core may be encased in an air permeable cover or sleeve and the skilled person will appreciate that in such a case the metal foil is in direct contact with the sleeve encasing the core. The metal foil is not sandwiched between layers of the envelope. Specifically, the metal foil is not sandwiched between layers of the envelope, which form a thermal bridge about the core.

The metal foil layer has an inner surface and an outer surface. As outlined above, the metal foil is disposed between the inner surface of the envelope and the core, for example between the envelope and an upper (or lower) surface of the core. The metal foil itself has an inner surface and an outer surface, and the inner surface of the metal foil is proximate the core, while the outer surface of the metal foil is proximate the inner surface of the envelope.

The metal foil does not form a thermal bridge between the upper and lower surfaces. In particular there will be no thermal bridge formed by the metal foil. For example, the metal foil will not extend about the sides of the insulating core. Instead, the metal foil will be located only on the upper and/or lower surface of the insulating core. It will not bridge across the insulating core.

This means that any diminution in the overall thermal conductivity performance of the vacuum insulation panel which results from using the metal foil is not further compromised by a thermal edge effect with heat transfer through a thermal bridge which bypasses the core.

The present inventors have thus discovered that it is possible to have a construction where the overall aged thermal performance of the vacuum insulation panel is improved despite the use of metal foil(s) that have inferior thermal conductivity properties than the insulating core or the envelope.

In particular, the inventors have discovered that it is possible to reduce air permeation through the envelope to an extent that it improves aged thermal performance, despite the use of a metal foil with a thermal conductivity that would typically be deemed unsuitable for use in VIPs as higher conductivity materials are traditionally considered to disimprove thermal performance.

This reduction in air permeation and resultant improvement in aged thermal performance is accomplished by having an envelope that surrounds the core and having a metal foil that is only present on the upper and/or lower surface of the core.

The metal foil is attached to the inside of the envelope. Typically this is done after the vacuum is applied. The metal foil may be bonded to the inside of the envelope after a vacuum has been applied and after the VIP is formed.

In a vacuum insulation panel of the invention the envelope comprises an inner layer and the metal foil has at least one outer layer attached thereto wherein the envelope inner layer and the outer layer on the metal foil are attached to each other being optionally bonded to each other. In this context inner is with respect to the panel construction and in particular the core. So an inner layer on the envelope is on the side (e.g. of the envelope) that faces inwardly towards the core and an outer layer is on a side (e.g. of the metal foil) that faces outwardly away from the core.

As will be appreciated in order to minimise permeation, it would be desirable to have a permeation barrier across the entire envelope. It would be desirable that the permeation barrier surrounds the entire core.

In this respect VIPs that are already on the market have been constructed to be resistant to permeation. For example it is typical for a VIP to have an envelope constructed of a metallised film formed from a polymer film coated with one or more metallised layers. For example metallised PET (metallised polyethylene terephthalate) has been used to construct an envelope. In these cases the metal is applied by a metal deposition technique on the desired film and the metallised layer is typically of the order of nanometres (in thickness). For example such a metallised layer may be of the order of 10 to 30 nm for example about 18 nm (thick). The metallised film (which comprises a polymer film coated with typically one or more metallised layers) is often of the order of 5 to 20 microns in thickness, for example about 12 microns in thickness. (This is the thickness of the polymer film and the metallised layer(s) taken together.) Often the metal used is aluminium.

As outlined above metallised film for example metallised PET can be used to create an envelope for a VIP. The metallised PET film, comprises a film of polyethylene terephthalate coated with at least one thin layer of metal (i.e. a metallised layer). To create a VIP a number of layers each layer being a metallised film, such as a PET metallised film of the type described above, can be used to create the envelope. In such cases the metallised film is formed as a laminate. The metallised layers may be attached to an inner envelope layer of for example polyethylene (PE). Other suitable inner envelope inner layers include low density polyethylene (LDPE) e.g. linear low density polyethylene (LLDPE), and ultra-high molecular weight polyethylene (UHMWPE); polypropylene and ethylenevinyl alcohol (EVOH), polyvinylidene chloride (PVDC); thermoplastic urethanes; including combinations thereof including copolymers and blends thereof.

In any event, the material forming the envelope is wrapped around the core and the envelope is then sealed to itself. This may be done by the application of heat around the edges of the envelope, for example by catching two edges of the envelope material between heating jaws and then applying pressure and heating to seal the material into an envelope. A vacuum is then applied and the position on the envelope where the vacuum is applied is finally sealed also to form a vacuum retaining envelope.

When an envelope is constructed in this way, by folding a material upon itself and heat sealing it about the edges to form the envelope, the same material is used throughout the envelope. In particular, in the case of an envelope constructed from one or more metallised layers, the metallised film extends across the entire inner surface of the envelope. In particular, it extends across the upper surface, across the lower surface, and across the sides and thus bridges between the upper and lower surfaces.

The metal foil layer of the present invention can be used in conjunction with such an envelope construction. However, as mentioned above the metal foil layer of the present invention will not extend across the sides of the insulating core and will not bridge between the upper and lower surfaces of the core. Achieving such a construction according to the invention can be accomplished using the method of the invention as set out below.

In the arrangement described, the inner layer on the envelope and the outer surface of the metal foil are arranged proximate each other. The inner surface of the envelope and the metal foil may initially be provided separately and then later be joined. Typically the outer layer on the metal foil is provided across substantially the entire surface area of the upper and/or lower surface of the metal foil. As the metal foil corresponds substantially in surface area with the upper and/or lower surface of the core, this means that the metal foil is held on the inside of the envelope and in a position at which it aligns substantially with the upper and/or lower surface of the core. The metal foil does not extend from the upper and/or lower surface about the sides of the core.

Desirably the at least one metal foil is a rolled metal. The metal foil will be capable of being handled by itself. It is self-supporting and does not have to be provided on a support. However, for convenience, and in particular for ease of attachment to the envelope, a layer is provided on the metal foil, for example a layer is provided at least on an outer surface thereof. That layer will be compatible with a layer of the envelope in order that the two layers may then be joined, for example by heating. Optionally, the layer provided on the outer surface of the metal foil is a polymer layer.

It will be appreciated that even though the material forming the envelope is edge sealed in order to form the envelope, this edge sealing will not join the metal foil to the envelope because the metal foil does not extend about the sides of the envelope. Instead the metal foil is attached to the envelope in a subsequent manufacturing step as will be described in more detail below.

The metal foil is formed of stainless steel.

Desirably the thickness of the at least one metal foil is of from 4 micron to 50 micron, or of from 4 micron to 30 micron, or of from 4 micron to 20 micron, or of from 4 micron to 18 micron, or of from 4 micron to 16 micron, or of from 4 micron to 14 micron, or of from 4 micron to 12 micron, or of from 6 micron to 20 micron, or of from 6 micron to 18 micron, or of from 6 micron to 16 micron, or of from 6 micron to 14 micron, or of from 6 micron to 12 micron, or of from 8 micron to 20 micron, or of from 8 micron to 18 micron, or of from 8 micron to 16 micron, or of from 8 micron to 14 micron, or of from 8 micron to 12 micron.

Desirably a vacuum insulation panel of the invention comprises two metal foils, wherein one metal foil extends across substantially the entire surface of the core on the upper surface and a second metal foil extends across substantially the entire surface of the core on the lower surface.

Desirably a metal foil extends across at least 80%; such as at least 85%; for example at least 90% for example at least 95% of an upper or lower surface of the core.

Within the invention an inner layer of the envelope may comprise a thermoplastic material which softens sufficiently to be heat sealed. The softening occurs at a temperature lower than the temperature at which the integrity of the envelope is compromised.

The thermoplastic material may be selected from the group consisting of polyethylene including low density polyethylene (LDPE) e.g. linear low density polyethylene (LLDPE), and ultra-high molecular weight polyethylene (UHMWPE); polypropylene and ethylenevinyl alcohol (EVOH), polyvinylidene chloride (PVDC); thermoplastic urethanes; including combinations thereof including copolymers and blends thereof.

Any suitable grade of material may be utilised. These include plasticised grades, flame retardant grades and combinations thereof.

Where an outer layer is provided on the metal foil the outer layer may comprise a thermoplastic polymer selected from the group consisting of polyethylene, polypropylene and ethylenevinyl alcohol or copolymers thereof.

An outer layer is provided on the metal foil and an inner layer is provided on the envelope and the outer layer on the metal foil and the inner layer on the envelope are bonded by heating the panel.

It is desirable that the metal foil attaches across substantially its entire surface area to the inside of the envelope. For example, when attached, the envelope and the metal foil may effectively form a laminate structure. The metal forms the innermost layer of said laminate structure. The skilled person will appreciate that the metal foil is proximate the core. The metal foil is not sandwiched between layers of plastic which form a thermal bridge about the core.

The inner layer of the envelope may comprise a polyethylene material such as a polyethylene film and the outer layer on the metal foil may comprise a polyethylene material such as a polyethylene coating.

The inner layer of the envelope which attaches to the metal foil may have a thickness in the range from about 10 to about 50 microns. The outer layer of the metal foil which attaches to the envelope may have a thickness in the range from about 10 to about 50 microns.

As mentioned above, the metal foil is attached to a layer, and said layer is attached to the outer surface of the metal foil. The layer is typically a polymer layer. The layer is a thermoplastic polymer layer. The layer is attached to the metal foil by any desired method including utilising adhesive. The layer attached to the metal foil, may for example be polyethylene (PE). In such a case, the metal foil may form part of a laminate structure. Whether in a laminate structure or not, the metal foil will not be directly (or indirectly) attached to the inner surface of the envelope until after the vacuum is applied. Optionally, a layer may also be attached to the inner surface of the metal foil. This layer is typically a polymer layer, optionally a thermoplastic polymer layer and said layer may be attached to the metal foil by any desired method including utilising adhesive. This inner layer on the metal foil does not extend about the sides of the core. For example, the metal foil inner layer does not form a thermal bridge between the upper surface of the core and the lower surface of the core. The inner layer may be substantially the same size as the metal foil, suitably, the inner layer on the metal foil is the same size as the metal foil.

The envelope may comprise a metallised film, for example the envelope may comprise a plurality of metallised films. For example it may comprise a plurality of metallised films in a laminate structure. For example three metallised films may be provided within a laminate structure. In such an arrangement the metallised side of the film would typically face outwards (towards the exterior of the envelope).

A further layer may be provided as the inner layer of the envelope. Such a layer will typically be a non-metallised layer. As above the further layer may be a polyethylene layer. Again, the overall structure of the envelope may be provided as a laminate and the envelope is then created from that laminate. The envelope is sealed by edge sealing. However, the metal foil, or any laminate in which the metal foil is incorporated, is not attached to the envelope by the edge sealing process.

The material supporting the metal layers in the metallised film will typically be a polymeric material. It will be selected to have a higher melting point than the inner layer of the envelope. For example the envelope may be constructed of a plurality of layers of metallised PET whereas the inner layer of the envelope may be formed from PE.

Typically PET has a melting point that is greater than that of polyethylene. For example PET may have a melting point that is greater than 250°C. Polyethylene has a melting point typically in the range from about 105 to 180°C. For example low density polyethylene may have a melting point in the range from about 105 to 115°C. For example medium to high density polyethylene may have a melting point in the range from 115 to 180°C.

Typical metallised films have an oxygen transmission rate (OTR) of less than about 2 x 10⁻³ cc/m²day as measured according to ASTM D3985 (measured at 23 °C with 50% relative humidity) and moisture vapour transmission rates of about 0.02 g/m²day as measured according to ASTM F1249-90 (measured at 38 °C with 100% relative humidity). In contrast typical aluminium foils have an oxygen transmission rate of less than about 5 x 10⁻⁴ cc/m²day measured according to ASTM D3985 (measured at 23 °C with 50% relative humidity) and moisture vapour transmission rates of less than about 0.005 g/m²day as measured according to ASTM F1249-90 (measured at 38 °C with 100% relative humidity). The aforementioned values are measured for planar film samples and the planar film samples do not have seals such as those found in a VIP envelope.

In a VIP envelope, defects in the envelope barrier material and the presence of an envelope seal lead to a permeation value for the envelope which is higher than a permeation value determined for a planar film sample as utilised according to the above-mentioned standard test methods. The permeation through an envelope is thus generally higher due to permeation through the envelope seals, which do not possess a metallisation barrier. The overall oxygen transmission rate through a traditional VIP envelope is typically an order of magnitude higher than that for a planar film, due to the presence of the non-metallised seals; i.e. the oxygen transmission rate through a traditional metallised film VIP envelope is about 20 x 10⁻³ cc/m²day.

While the OTR for a VIP envelope made of metallised film (e.g. metallised PET) is about 20 x 10⁻³ cc/m².day, the OTR for a VIP envelope made of aluminium foil is about 5 x 10⁻³ cc/m².day.

Suitably, the envelope comprises a metallised film. More suitably, the envelope comprises a plurality of metallised films. The presence of the metal foil which is attached to the inner layer of the envelope after a vacuum has been applied substantially improves the barrier properties of the envelope, for example moisture vapour transmission rate and the oxygen transmission rate are substantially reduced in comparison to traditional VIPs.

The moisture vapour transmission rate (MVTR) of a VIP according to the present invention is between about 1.5 x 10⁻³ g/m².day and about 3.0 x 10⁻³ g/m².day. Preferably the MVTR of the VIP according to the present invention is about 2.5 x 10⁻³ g/m².day or less.

The oxygen transmission rate (OTR) of a VIP according to the present invention is between about 2 x 10⁻³ cc/m².day and about 5 x 10⁻³ cc/m².day. Preferably the OTR of a VIP according to the present invention is about 4 x 10 ⁻³ cc/m².day or less.

Suitably, a VIP according to the present invention has a MVTR of about 2.5 x 10⁻³ g/m².day or less and an OTR of about 4 x 10 ⁻³ cc/m².day or less. These effects are achieved by the presence of the metal foil being attached to the inner layer of the envelope by the outer thermoplastic layer adhered to the metal foil, and the enhanced edge sealing effect achieved as a result of effecting the attachment of the metal foil to the envelope inner layer after the vacuum has been applied. The combined effects result in an improved VIP with increased longevity and lower thermal conductivity than conventional VIPs.

Suitably, a VIP according to the present invention has a thermal conductivity of about 4.5 mW/m.K or less.

The present invention also provides an envelope for a vacuum insulation panel having a core, said core having an upper surface, a lower surface and sides; wherein the envelope has an inner surface and an outer surface; wherein the envelope is adapted to be placed about the core and arranged to envelop the core, and to maintain an applied vacuum within the envelope; wherein the inner surface of the envelope is proximate the core and the outer surface of the envelope is distal the core; wherein the inner surface of the envelope comprises an inner layer, for example of thermoplastic material, such as polyethylene; the envelope further comprising, at least one metal foil having a thickness of from 4 microns to 50 microns, said metal foil comprising an outer thermoplastic layer adhered thereto, said metal foil being attached to the innermost surface of the envelope and positioned to be between the envelope and the core and to extend across substantially the entire surface of the core on the upper surface and/or lower surface thereof and wherein the foil does not extend about the sides of the insulating core, and the foil does not form a thermal bridge between the upper surface and lower surface of the core and wherein the at least one metal foil is formed of stainless steel.

The at least one metal foil may be attached to the inner surface of the envelope by a bond formed between the metal foil and the inner layer of the envelope.

In embodiments where there are two metal foils, one metal foil can be positioned to be between the envelope and the core to extend across substantially the entire upper surface of the core and one metal foil is positioned to be between the envelope and thee core to extend across substantially the entire lower surface of the core.

In the envelope of the invention, the at least one metal foil is arranged in discrete areas of the envelope so that in a finished VIP as described above, the foil does not form a thermal bridge between the upper surface and the lower surface of the core. The foil is attached to the inner surface of the envelope and arranged in such a manner so as to be substantially on the upper surface and/or lower surface of the core of a VIP, without wrapping around the sides of the core. This configuration ensures the metal foil does not form a thermal bridge between the upper surface of the core and the lower surface of the core.

The attachment of the foil to the inner surface of the envelope improves the aged thermal performance of the resulting VIP, as permeation through the envelope of the present invention is considerably lower than permeation through traditional VIP envelopes.

The present invention also provides for use of an envelope as described above in a vacuum insulation panel.

The envelope of VIPs of the present invention have an improved permeation performance in comparison to traditional VIP envelopes made solely of metallised films. Due to the presence of the metal foil bonded to the inner layer of the envelope as described above, permeation through the envelope, is significantly decreased. Thus the OTR and MVTR for the envelope of the VIP of the present invention is significantly reduced in comparison to VIPs with envelopes made solely of metallised films. The envelope of a VIP according to the present invention has an OTR of between about 2 x 10⁻³ cc/m².day and about 5 x 10⁻³ cc/m².day. In addition, the MVTR of an envelope of a VIP according to the present invention is between about 1.5 x 10⁻³ g/m².day and about 3.0 x 10⁻³ g/m².day.

Preferably the MVTR of an envelope according to the present invention is about 2.5 x 10⁻³ g/m².day or less. Preferably the OTR of an envelope according to the present invention is about 4 x 10 ⁻³ cc/m².day or less.

In one embodiment, the envelope of the VIP of the present invention has an OTR of about 4 x 10⁻³ cc/m².day. In another embodiment, the envelope of the VIP of the present invention has an MVTR of about 2.5 x 10⁻³ g/m².day. In a further embodiment, the envelope of the VIP of the present invention has an OTR of about 4 x 10⁻³ cc/m².day and an MVTR of about 2.5 x 10 ⁻³ g/m².day.

Accordingly, the permeation properties of the envelope of the invention are better or similar to the permeation properties of an aluminium envelope. However, because the thermal conductivity of the envelope according to the invention is much lower about the edges of the VIP than the thermal conductivity of an aluminium envelope, the thermal edge effect is comparatively reduced.

The present invention also provides a process for manufacturing a vacuum insulation panel as set out in the claims comprising the steps of:
(a) providing a porous insulating core having an upper surface and a lower surface and sides; wherein the insulating core is constructed from a powder insulating microporous material selected from the group consisting of fumed silica, precipitated silica, perlite, diatomaceous earth or combinations thereof;
(b) providing at least one metal foil having a thickness of from 4 microns to 50 microns which extends across substantially the entire upper surface or entire lower surface of the core so that the foil does not form a thermal bridge between the upper surface and lower surface of the core; wherein the metal foil has at least one outer thermoplastic layer adhered thereto;
(c) providing an envelope having an inside surface and an outside surface, wherein the envelope is arranged to: (i) envelop the core and the metal foil, with the metal foil between the envelope and the core, and (ii) to maintain an applied vacuum within the envelope;
(d) applying a vacuum to the envelope; wherein the envelope comprises an envelope inner layer;
(e) attaching the metal foil to an inside surface of the envelope after the vacuum has been applied to provide a vacuum insulation panel having a thermal conductivity of from 3.0 mW/m.K to 4.0 mW/m.K and wherein the at least one metal foil is formed of stainless steel.

By completing the attaching step after applying the vacuum, the pressure differential across the envelope (caused by reduced pressure within the envelope due to application of the vacuum) creates a very strong urging force for mating the metal foil to the inside of the envelope. In essence then atmospheric pressure is sufficiently strong to press the envelope against the metal foil and in turn the metal foil against the core. This pressure is sufficient to allow the two separate parts (the metal foil and the envelope) to be joined across their entire mating area.

It will be appreciated that the attaching step can be done after any equipment for applying the vacuum has been removed. That is the attaching step can be carried out when the retained vacuum within the envelope is the only vacuum present. So the attaching step can be done after the VIP has been evacuated and then sealed to retain the vacuum. It is the vacuum within the evacuated and then sealed envelope that is present.

The metal foil will be placed so as to reduce the permeability of the envelope across substantially the entire upper or lower surface area of the core.

Where the envelope comprises an envelope inner layer and the metal foil has at least one outer layer attached thereto the envelope inner layer and the outer layer on the metal foil are attached to each other and are optionally bonded to each other.

Any construction of vacuum insulation panel of the invention described herein may be made by the process of the invention.

The inner layer of the envelope may comprise a polymer selected from the group consisting of polyethylene, polypropylene and ethylenevinyl alcohol or copolymers thereof.

The outer layer on the metal foil may comprise a polymer selected from the group consisting of polyethylene, polypropylene and ethylenevinyl alcohol or copolymers thereof.

The metal foil and the inside surface of the envelope are attached to each other by heating the panel (after the vacuum is applied). Suitably, the entire panel is heated in an oven. By heating the entire panel as opposed to simply heating the upper and or lower surface thereof, the edge seal is significantly enhanced.

The metal foil and the inside surface of the envelope may be attached to each other by heating the panel to a temperature of between about 100 and 180 degrees Celsius optionally for approximately 0.5 to 10 minutes.

After heating to a temperature in the range from about 100 and 180 degrees Celsius for approximately 0.5 to 10 minutes, the panel is cooled to ambient temperature within approximately 1 to 15 minutes.

A conventional VIP has a thermal conductivity (lambda value) of approximately 5.0 mW/m.K. VIPs of the present invention have a thermal conductivity of about 3.0 mW/m.K to about 4.0 mW/m.K; desirably VIPs of the present invention have a thermal conductivity value of about 3.5 mW/m.K or less such as about 3.2 mW/m.K or less.

VIPs of the present invention have improved thermal conductivity values, and longer lifetime than traditional VIPs as permeation through the barrier envelope is reduced due to the presence of the at least one metal foil layer within the VIP.

Furthermore, the seal about the edges of envelope of VIPs of the present invention, is substantially stronger and larger than the seal about the edges of a traditional VIP, due to the method of manufacture of the present VIP, which is explained in detail below.

Optionally the insulating material may be a microporous insulating material with an average particle size of less than about 1 micron in diameter. In general the microporous insulating material has an average particle size of about 20 nm to about 500 nm, for example from about 50 nm to about 500 nm, or from about 50 nm to about 400 nm, or from about 50 nm to about 350 nm, or from about 50 nm to about 300 nm, or from about 100 nm to about 300 nm, or from about 100 nm to about 400 nm. Suitably, the microporous insulating material has an average particle size of less than about 200 nm.

These materials may be mixed with infra-red absorbing materials (IR opacifiers) such as carbon black, titanium dioxide, iron oxides, magnetite or silicon carbide, or combinations thereof.

Accordingly, while the insulation material of the insulating core is primarily composed of microporous materials, there may in addition be smaller percentages (typically 5-20% each) of a fibre binder (which can be polymeric or inorganic) and an infra-red opacifier (e.g. silicon carbide, carbon clack or iron oxide). Neither the fibres nor the opacifier need be microporous and generally they are not microporous.

The insulation material may be a mixture; for example it may comprise fibres which serve to bind the particulate material together (once pressed). The fibres may be of organic or inorganic material. In one case the fibres are polyester or polypropylene fibres.

The insulation core comprises powder based insulating material as set out in the claims. For example the insulating core may comprise fumed silica, precipitated silica or perlite, or combinations thereof. The porous insulating core is constructed from a powder material that is formed into an insulating (microporous) core.

The core may be encased in an air permeable cover prior to encasing the core and the at least one metal foil layer(s) in the flexible envelope.

For example, the air permeable cover may be selected from non-woven PET fleece or perforated shrink wrap.

The envelope may be constructed of metallised polyethylene terephthalate (PET) laminate. Suitably, the envelope is an aluminium metallised polyester comprising a layer of polyethylene on the aluminium, for example as a laminate. When forming the VIP the layer of polyethylene is within the envelope. The polyethylene layer is employed to seal the VIP once the envelope comprising the core and the at least one metal foil layer(s) is evacuated. The envelope may also be metallised ethylene vinyl alcohol (EVOH), or metallised polypropylene (PP).

Desirably the insulating core comprises fumed silica.

The insulating cores utilised in conventional VIPs, such as those constructed from a material comprising powdered insulating material, for example fumed silica have core densities in the range of from about 170 to about 200 kg/m³. The resulting thermal conductivity of conventional VIPs ranges from about 4.0 mW/m.K to about 4.5 mW/m.K.

### Brief Description of the Drawings

Embodiments of the invention will be described, by way of example only, with reference to the accompanying drawings in which:
**Figure 1** is a perspective cut-away view of a VIP according to the present invention.
**Figure 2** is a perspective cut-away view of a VIP according to the present invention.
**Figure 3** is a cross-sectional view of a VIP according to the present invention.
**Figure 4** is a perspective cut-away view of a VIP according to the present invention, with an exploded view of the barrier envelope structure and an exploded view of the metal foil.
**Figure 5** is a cross-sectional view of the barrier envelope.
**Figure 6** is a cross-sectional view of the metal foil.
**Figures 7A** **and** **7B** show a cross-sectional view depicting forming a seal and then the seal obtained when a VIP envelope is sealed.
**Figure 8** a cross-sectional view depicting the seal obtained when the envelope of a VIP according to the present invention is sealed.
**Figure 9** is a perspective cross-sectional view of a VIP according to the present invention, showing the envelope seal at the sides of the VIP.
**Figure 10** is a perspective view of a VIP according to the present invention.

### Detailed Description of the Drawings

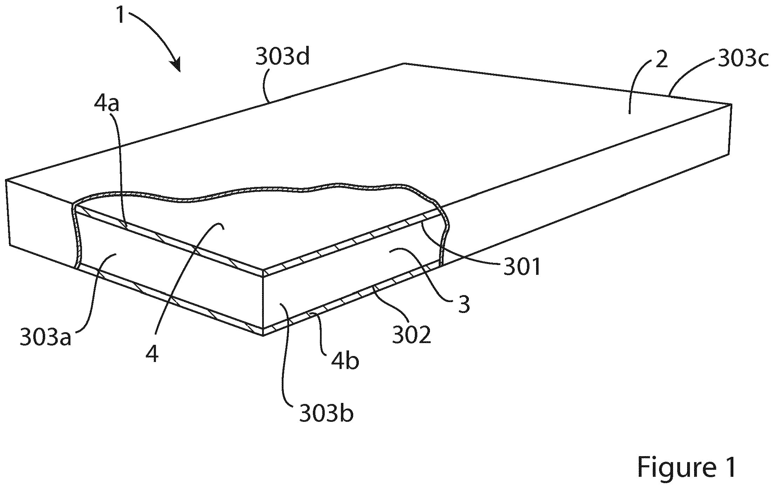

**Figure 1** is a perspective cut-away view of a VIP 1 according to the present invention. Figure 1 shows a porous insulating core 3, having an upper surface 301 and a lower surface 302 and respective sides 303a-303d. An envelope 2 about the insulating core 3 is arranged to envelop the core, and to maintain an applied vacuum within the envelope 2. A metal foil 4 having a thickness of at least 4 microns is disposed between the envelope 2 and the core 3. A metal foil 4a extends across substantially the entire upper surface 301 of the core, without forming a thermal bridge between the upper surface 301 and the lower surface 302 of the core. A second metal foil 4b extends across substantially the entire lower surface 302 of the core, without forming a thermal bridge between the lower surface 302 and the upper surface 301 of the core. Neither the metal foil 4a, nor the metal foil 4b are attached to the core 3.

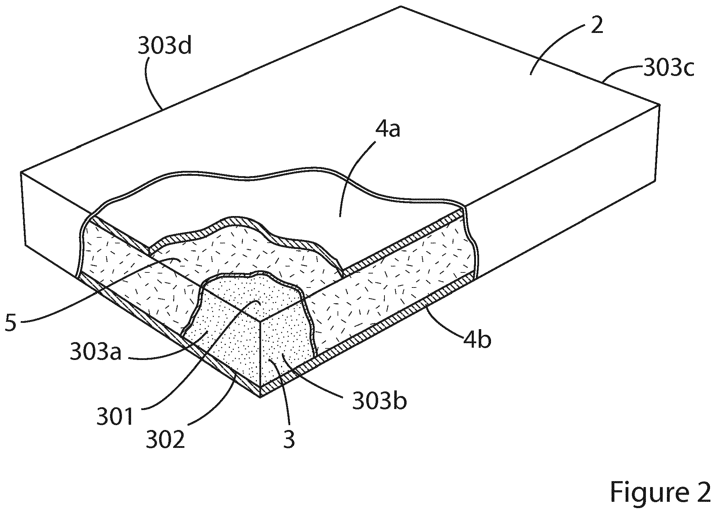

**Figure 2** is a perspective cut-away view of a VIP analogous to that shown in Figure 1, however, a fleece 5 is shown encasing the insulating core 3. One metal foil 4a is shown atop the fleece 5, on the upper surface 301 of the insulating core 3. A second metal foil 4b is shown below the fleece 5, on the lower surface 302 of the insulating core 3. Neither 4a nor 4b are attached to the core or the fleece 5.

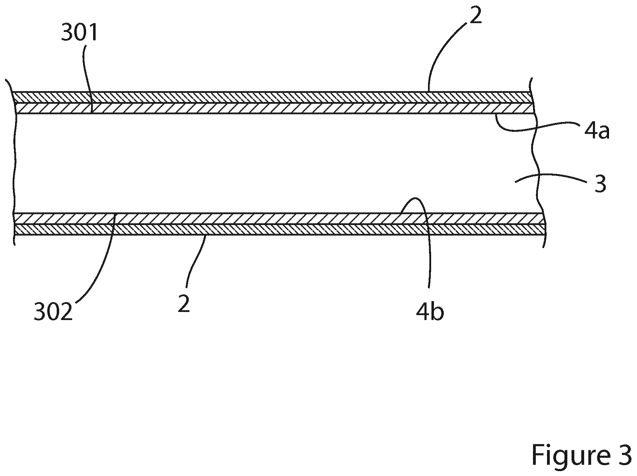

**Figure 3** is a cross-sectional view of a VIP according to the present invention. Figure 3 clearly shows the metal foil 4 disposed between the insulating core 3 and the envelope 2. Indeed **Figure 3** shows a metal foil 4a extends across substantially the entire upper surface 301 of the core, without forming a thermal bridge between the upper surface 301 and the lower surface 302 of the core. **Figure 3** also shows a second metal foil 4b which extends across substantially the entire lower surface 302 of the core, without forming a thermal bridge between the lower surface 302 and the upper surface 301 of the core.

It will be noted that the foils 4a and 4b are not attached to the core 3. Instead they are initially separate from the envelope 2 and the core 3 and are later attached to the envelope 2 as will be described below.

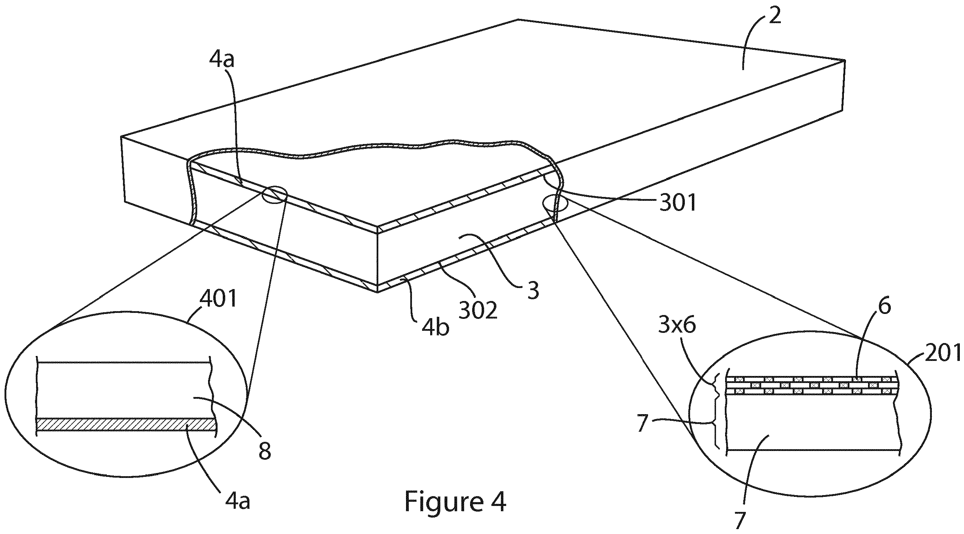

**Figure 4** is a perspective view of a VIP according to the present invention, similar to that of Figure 1, with an exploded view of the envelope 2 shown as an envelope structure 201 and an exploded view of the foil 4a shown as a metal foil structure 401. (It will be appreciated that even though there are two separate foils 4a and 4b each may have the same structure.) The exploded view of the envelope structure 201 shows three metallised films 6. Each metallised film 6 is a metallised plastic layer of for example metallised PET. Suitably, metallised polypropylene (PP) or metallised EVOH (ethyl vinyl alcohol) may also be employed. The metallised films 6 are attached to an envelope inner layer 7. The envelope inner layer 7 is typically a thermoplastic polymer, such as polyethylene. Suitable alternatives include low density polyethylene (LDPE) e.g. linear low density polyethylene (LLDPE), and ultra-high molecular weight polyethylene (UHMWPE); polypropylene and ethylenevinyl alcohol (EVOH), polyvinylidene chloride (PVDC); thermoplastic urethanes; including combinations thereof including copolymers and blends thereof.

The exploded view of the metal foil structure 401 shows the metal foil 4a with an outer layer 8 attached thereto. The outer layer 8 is typically a thermoplastic polymeric material, for example polyethylene.

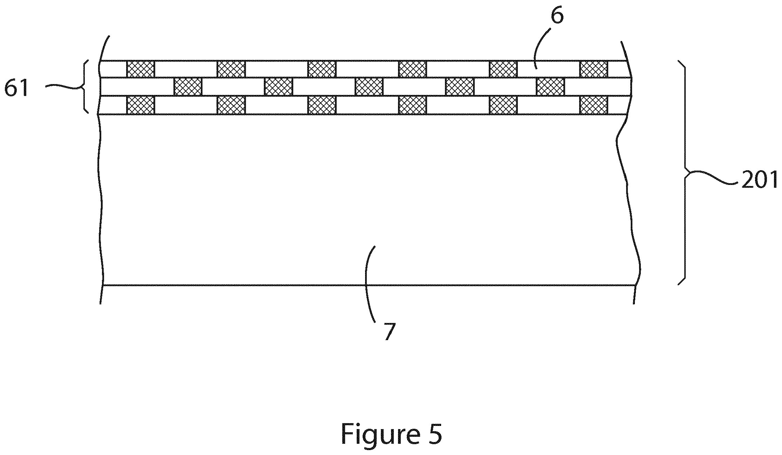

**Figure 5** is a cross-sectional view showing the construction of the envelope structure 201. The layers of metallised film 6 are bonded together for example to form a laminate 61. Each layer (i.e. polymer film and metal applied to it taken together) is typically about 12 micron thick. The laminate structure is bonded to an inner envelope layer 7 of thermoplastic material, for example a layer of polyethylene.

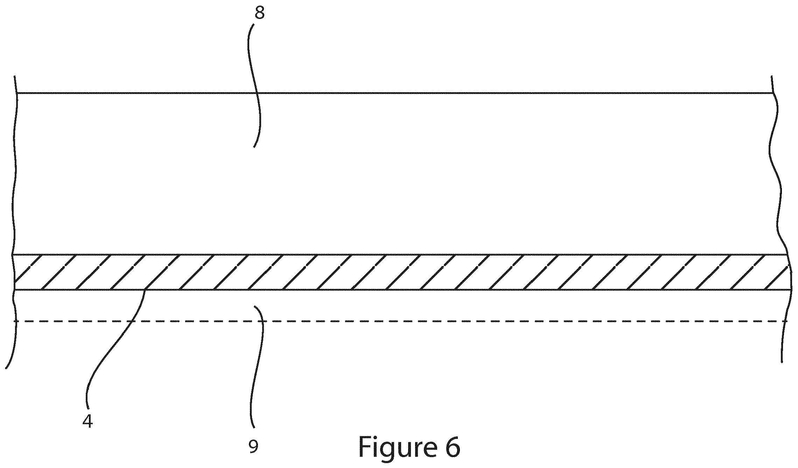

**Figure 6** is a cross-sectional view showing the construction of the metal foil structure. The metal foil 4 is attached to an outer layer 8 of thermoplastic material, for example a layer of polyethylene. Optionally the metal foil 4 is attached to an inner layer 9 of a suitable polymer, for example PET.

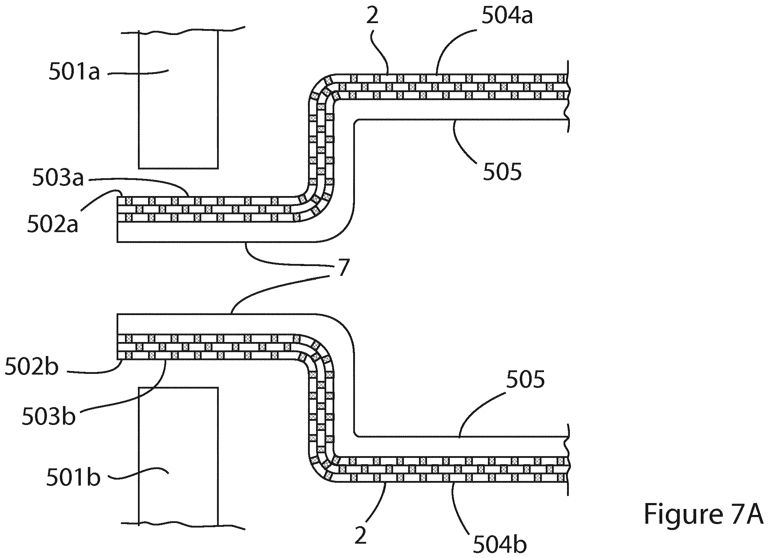

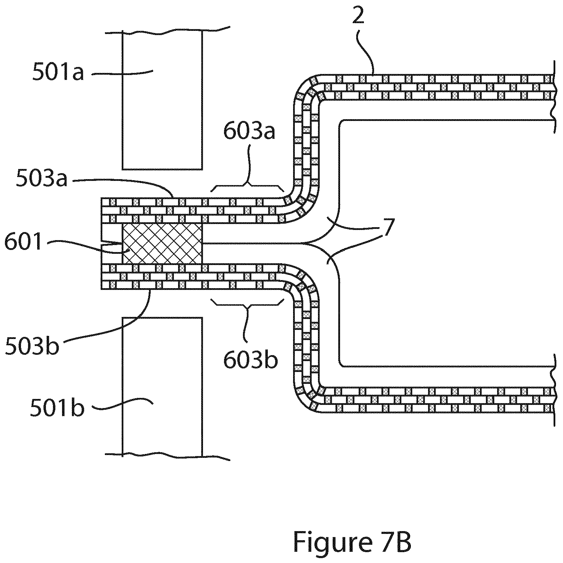

**Figures 7A** **and** **7B** show a cross-sectional view depicting method of sealing and the seal obtained when a VIP envelope is sealed. As shown in **Figure 7A** heating irons or jaws 501a and 501b are employed to grip opposing sides (upper side grip 502a and lower side grip 502b) of the envelope 2 bringing them together and said jaws apply heat to the edges 503a (upper edge) and 503b (lower edge) of the opposing sides 504a (upper side) and 504b (lower side) of the envelope 2. An inner layer of polymer 7 on the inside surface 505 of the envelope 2, between the edges 503a and 503b gripped by the heating jaws 501a and 501b, softens sufficiently, to form a bond 601 between the edges 503a and 503b of the envelope 2 in contact with each other between the heating jaws 501a and 501b (see **Figure 7B**). Only the inner layer of polymer 7 exposed to the application of heat softens to for a bond or seal 601 between the edges 503a and 503b. The application of heat from the heating irons or jaws 501a and 501b to the edges of the envelope 503a and 503b, does not soften the inner layer of polymer 7 substantially beyond the gripped edges 503a and 503b of the envelope 2. Hence, the application of heat from heating jaws 501a and 501b does not cause proximate edge portions 603a and 603b to bond to each other. Furthermore, the metal foil layers 4 within the evacuated VIP 1 are not attached to the inner layer of the envelope at this stage in production.

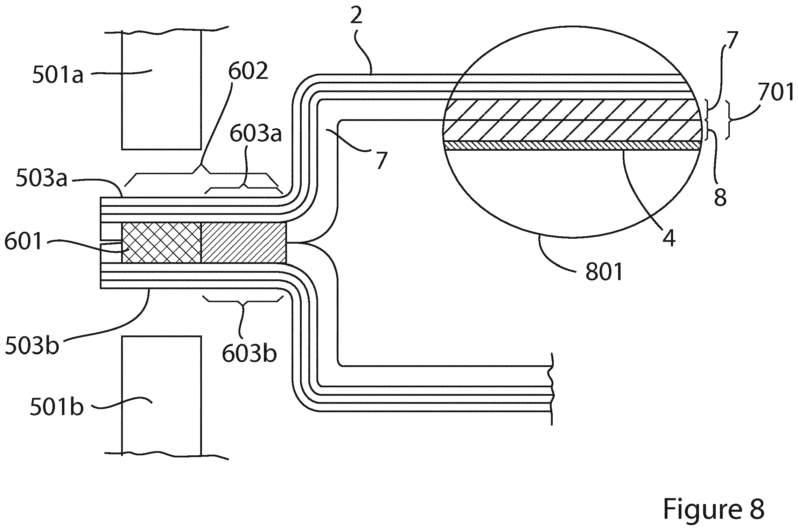

**Figure 8** is a cross-sectional view depicting the seal 602 obtained when the envelope 2 of a VIP according to the present invention is sealed. Similar to the method described in relation to Figures 7A and Figure 7B above, heating jaws 501a and 501b apply heat to bond the edges 503a and 503b of the envelope 2 of VIP 1. As described above, seal 601 is formed by application of heat from heating jaws 501a and 501b to said edges. The entire VIP 1 is subsequently heated to attach the each of the metal foil layers 4 to the inner layer 7 of the envelope 2. As shown in the highlighted part 801 of Figure 8, once the entire VIP 1 is heated, the inner layer 7 of the envelope 2 softens as does the outer layer 8 on the metal foil 4, thereby forming a bond 701 between the metal foil 4 and the envelope 2. In addition, by heating the entire VIP 1, to attach the inner layer 7 of the envelope 2 to the metal foil 4, the inner layer 7, at proximate edges 603a and 603b of the envelope 2, which were not directly exposed to the heat of the heating jaws 501a and 501b, soften sufficiently, to provide an enhanced edge seal 602 about the envelope 2. It will be appreciated that not only does the vacuum assist with bonding of the metal foil to the envelope but also in drawing together the parts of the envelope about the initial seal, and in particular those on the vacuum side of the initial seal. Accordingly, VIPs of the present invention have an improved envelope seal in comparison to those of traditional VIPs. An enhanced seal increases the longevity of the VIP and contributes to an improved aged thermal performance of the VIP.

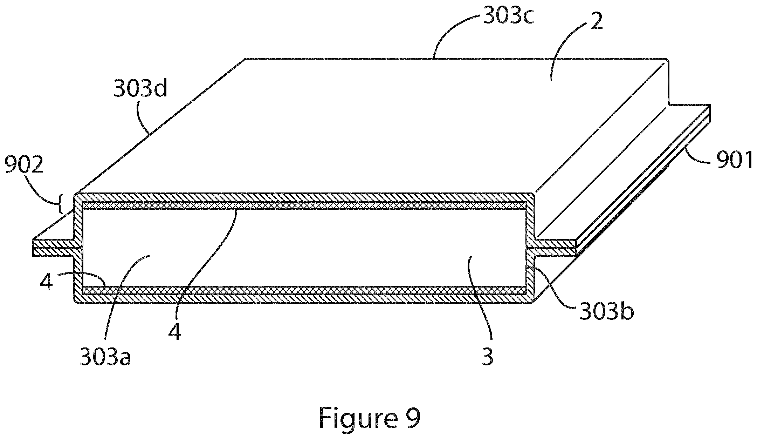

**Figure 9** is a perspective cross-sectional view of a VIP 1 according to the present invention, showing the envelope seal 901 at the sides of the VIP 1 (only sides 303b and 303d are shown). Figure 9 clearly shows the metal foil 4 disposed between the insulating core 3 and the envelope 2. 902 shows how the metal foil 4 is arranged so as not to form a thermal bridge across the insulating core, as the metal foil does not wrap around the sides 303a-303d of the insulating core. Figure 9 shows the VIP according to the present invention prior to folding and taping the edges to form the finished product.

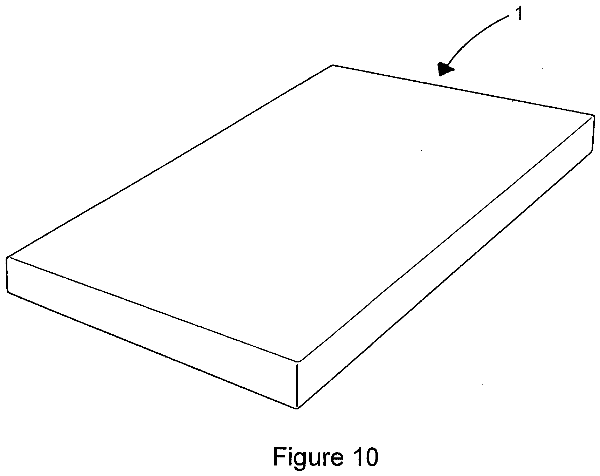

**Figure 10** is a perspective view of a VIP according to the present invention, wherein the edge seals have been folded and taped to provide a substantially cuboid finished VIP.

The ability of a VIP envelope to maintain a defined vacuum during the lifetime of a VIP is of great importance in achieving and maintaining long-term thermal performance. Thermal edge effects occur due to the relatively high thermal conductivity of the envelope material which envelops the insulating core. Thermal edge effects are observed because the envelope acts as a thermal bridge around the insulating core, which has a very low thermal conductivity, once a vacuum is maintained, within the VIP.

Choosing a material suitable for a VIP envelope is therefore a balance between selecting a material with a desirably low thermal conductivity and a low permeation. Metallised films as described above which are employed as envelopes in traditional VIPs have a reasonably low thermal conductivity. However, their permeability substantially reduces the lifetime and therefore, overall utility of traditional VIPs.

The present invention marries the desirable low thermal conductivity properties of traditional VIP envelopes with the desirable low permeability properties of metal foils.

A VIP according to the present invention may be constructed as described above.

After a vacuum is applied and the edge of the VIP is sealed, the metal foil disposed between the inner surface of the envelope and at least the upper surface of the insulating core is attached to the inner surface of the envelope. For example, the metal foil may be attached to an outer layer of thermoplastic material, such as polyethylene and the envelope may have an inner envelope layer made of a thermoplastic material, such as polyethylene. As the VIP is evacuated the outer surface on the metal foil will be in close proximity to the inner surface of the envelope inner layer. When the VIP is heated, for example in an oven, to a temperature sufficiently high to soften the thermoplastic materials, the metal foil becomes attached to the inside surface of the envelope. The metal foil is arranged so as not to form a thermal bridge across the insulating core. However, the excellent low permeation properties of the foil significantly improve the permeation properties of the VIP. Accordingly, the lifetime of the VIP is significantly increased. It will be appreciated that the attachment of the foil to the envelope can be done after the VIP has been formed and in particular after any vacuum source has been removed. The vacuum retained within the envelope will assist in joining the foil to the envelope. Effectively the pressure differential between atmospheric pressure to the exterior of the VIP and the retained (reduced) pressure within the VIP imparts a force pressing the envelope towards the foil (and the core). And of course this force is imparted uniformly across the envelope. This is ideal for uniform joining of the envelope to the foil.

The procedural step of heating the evacuated VIP in an oven also improves the original heat seal at the edge of the envelope.

Because the envelope of a VIP is traditionally sealed between heating jaws as described above, only the area of the envelope directly exposed to the heat of the heating jaws is heated sufficiently in order to melt the thermoplastic inner envelope layer and join the two proximate edges. Edges of the envelope in close proximity which have not been exposed to elevated temperature are not joined/bonded.

In contrast, in the embodiment described above, whereby the metal foil of a VIP according to the present invention is attached to the inner surface of the VIP envelope, by heating the entire VIP (post evacuation), edges of the envelope which are proximate, which were not originally bonded by the heating jaws, remain proximate due to the external pressure applied to the evacuated VIP and when heated the thermoplastic layers of said edges soften and a bond is formed therebetween.

Thus in addition to providing an ultra-low permeation envelope, the seal of the VIPs of the present invention are considerably enhanced, in comparison to those of traditional VIPs, accordingly, the lifetime of the VIPs of the present invention are significantly longer than traditional VIPs without reducing the thermal performance.

The VIP envelopes shown in Figures 1-9 have an oxygen transmission rate of about 4 x 10⁻³ cc/m².day and a moisture vapour transmission rate of about 2.5 x 10⁻³ g/m².day.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A vacuum insulation panel comprising:
(a) a porous insulating core having an upper surface and a lower surface and sides; wherein the insulating core is constructed from a powder insulating microporous material selected from the group consisting of fumed silica, precipitated silica, perlite, diatomaceous earth or combinations thereof;
(b) an envelope about the core arranged to envelop the core, and to maintain an applied vacuum within the envelope;
(c) at least one metal foil having a thickness of from 4 microns to 50 microns between the envelope and the core and extending across substantially the entire surface of the core on the upper surface or lower surface thereof, wherein the foil does not extend about the sides of the insulating core, the foil does not form a thermal bridge between the upper surface and lower surface of the core; and the envelope comprises an envelope inner layer and the metal foil has at least one outer thermoplastic layer adhered thereto wherein the envelope inner layer and the outer layer on the metal foil are attached to each other by heating the panel after the vacuum has been applied;
said vacuum insulating panel having a thermal conductivity of from 3.0 mW/m·K to 4.0 mW/m·K and
wherein the at least one metal foil is formed of stainless steel.

2. A vacuum insulation panel according to claim 1, comprising two metal foils, wherein one metal foil extends across substantially the entire surface of the core on the upper surface and a second metal foil extends across substantially the entire surface of the core on the lower surface.

3. A vacuum insulation panel according to any preceding claim wherein the thickness of at least one metal foil is of from 4 micron to 30 micron, or of from 4 micron to 20 micron, or of from 4 micron to 18 micron, or of from 4 micron to 16 micron, or of from 4 micron to 14 micron, or of from 4 micron to 12 micron, or of from 6 micron to 20 micron, or of from 6 micron to 18 micron, or of from 6 micron to 16 micron, or of from 6 micron to 14 micron, or of from 6 micron to 12 micron, or of from 8 micron to 20 micron, or of from 8 micron to 18 micron, or of from 8 micron to 16 micron, or of from 8 micron to 14 micron, or of from 8 micron to 14 micron, or of from 8 micron to 12 micron.

4. A vacuum insulation panel according to any of claims 2 or 3 wherein the envelope comprises an inner layer and the inner layer of the envelope comprises a thermoplastic material which softens sufficiently to be heat sealed.

5. A vacuum insulation panel according to any preceding claim wherein the envelope comprises an inner layer and the inner layer of the envelope comprises a thermoplastic material which softens sufficiently to be heat sealed and wherein the thermoplastic material is selected from the group consisting of polyethylene including low density polyethylene (LDPE) e.g. linear low density polyethylene (LLDPE), and ultra-high molecular weight polyethylene (UHMWPE); polypropylene and ethylenevinyl alcohol (EVOH), polyvinylidene chloride (PVDC); thermoplastic urethanes; including combinations thereof including copolymers and blends thereof.

6. A vacuum insulation panel according to any preceding claim wherein the outer layer provided on the metal foil comprises a thermoplastic polymer selected from the group consisting of polyethylene, polypropylene and ethylenevinyl alcohol or copolymers thereof.

7. A vacuum insulation panel according to any preceding claim wherein the inner layer of the envelope comprises a polyethylene material such as a polyethylene film and the outer layer on the metal foil comprises a polyethylene material such as a polyethylene coating.

8. The vacuum insulation panel according to any preceding claim, having a moisture vapour transmission rate in the range of from 1.5 x 10⁻³ g/m².day to 3.0 x 10⁻³ g/m² day when measured according to ASTM F1249-90 at 38°C with 100% relative humidity.

9. The vacuum insulation panel according to any preceding claim, having an oxygen transmission rate in the range of from 2 x 10⁻³ cc/m².day to 5 x 10⁻³ cc/m².day as measured according to ASTM D3985 measured at 23°C with 50% relative humidity.

10. A process for manufacturing a vacuum insulation panel comprising the steps of:
(a) providing a porous insulating core having an upper surface and a lower surface and sides; wherein the insulating core is constructed from a powder insulating microporous material selected from the group consisting of fumed silica, precipitated silica, perlite, diatomaceous earth or combinations thereof;
(b) providing at least one metal foil having a thickness of from 4 microns to 50 microns which extends across substantially the entire upper surface or entire lower surface of the core so that the foil does not form a thermal bridge between the upper surface and lower surface of the core; wherein the metal foil has at least one outer thermoplastic layer adhered thereto;
(c) providing an envelope having an inside surface and an outside surface, wherein the envelope is arranged to: (i) envelop the core and the metal foil, with the metal foil between the envelope and the core, and (ii) to maintain an applied vacuum within the envelope;
(d) applying a vacuum to the envelope; wherein the envelope comprises an envelope inner layer;
(e) attaching the metal foil to an inside surface of the envelope by heating the panel after the vacuum has been applied to provide a vacuum insulation panel having a thermal conductivity of from 3.0 mW/m.K to 4.0 mW/m.K; wherein the at least one metal foil is formed of stainless steel.

11. A process for manufacturing a vacuum insulation panel, according to Claim 10 wherein the inner layer of the envelope comprises a polymer selected from the group consisting of polyethylene, polypropylene and ethylenevinyl alcohol or copolymers thereof.

12. A process for manufacturing a vacuum insulation panel, according to Claim 10 or Claim 11, wherein the outer layer on the metal foil comprises a polymer selected from the group consisting of polyethylene, polypropylene and ethylenevinyl alcohol or copolymers thereof.

13. A process for manufacturing a vacuum insulation panel, according to any of claims 10 to 12, wherein the metal foil and the inside surface of the envelope are attached to each other by heating the panel to a temperature of between about 100 and 180 degrees Celsius optionally for approximately 0.5 to 10 minutes.

## Patentansprüche

1. Ein Vakuumisolationspaneel, welches Folgendes aufweist:
(a) einen porösen isolierenden Kern, der einen Oberseite und eine Unterseite und Seiten hat; wobei der isolierende Kern aus einem isolierenden mikroporösen Pulvermaterial ist, welches aus der Gruppe ausgewählt ist, die aus pyrogenem Siliciumdioxid, ausgeschiedenem Siliciumdioxid, Perlit, Diatomäenerde bzw. Kieselgur oder Kombinationen davon besteht;
(b) eine Umhüllung um den Kern, die angeordnet ist, um den Kern zu umhüllen und um ein aufgebrachtes Vakuum in der Umhüllung zu halten;
(c) zumindest eine Metallfolie, die eine Dicke von 4 Mikrometern bis 50 Mikrometern hat, zwischen der Umhüllung und dem Kern, und die sich über im Wesentlichen die gesamte Oberfläche des Kerns auf der Oberseite oder der Unterseite davon erstreckt, wobei die Folie sich nicht um die Seiten des isolierenden Kerns erstreckt, wobei die Folie keine thermische Brücke bzw. Wärmebrücke zwischen der Oberseite und der Unterseite des Kerns bildet; und wobei die Umhüllung eine innere Umhüllungsschicht aufweist und wobei die Metallfolie zumindest eine daran anhaftende äußere thermoplastische Schicht hat, wobei die innere Schicht der Umhüllung und die äußere Schicht an der Metallfolie aneinander durch Aufheizen des Paneels angebracht wurden, nachdem das Vakuum aufgebracht worden ist;
wobei das Vakuumisolierpaneel eine thermische Leitfähigkeit von 3,0 mW/m K bis 4,0 mW/m K hat; und
wobei die zumindest eine Metallfolie aus Edelstahl ist.

2. Ein Vakuumisolierpaneel nach Anspruch 1, welches zwei Metallfolien aufweist, wobei die eine Metallfolie sich über im Wesentlichen die gesamte Oberfläche des Kerns auf der Oberseite erstreckt, und wobei eine zweite Metallfolie sich im Wesentlichen über die gesamte Oberfläche des Kerns auf der Unterseite erstreckt.

3. Ein Vakuumisolierpaneel nach irgendeinem vorhergehenden Anspruch, wobei die Dicke der zumindest einen Metallfolie von 4 Mikrometer bis 30 Mikrometer oder von 4 Mikrometer bis 20 Mikrometer, oder von 4 Mikrometer bis 18 Mikrometer oder von 4 Mikrometer von 16 Mikrometer, oder von 4 Mikrometer bis 14 Mikrometer oder von 4 Mikrometer bis 12 Mikrometer oder von 6 Mikrometer bis 20 Mikrometer oder von 6 Mikrometer bis 18 Mikrometer oder von 6 Mikrometer bis 16 Mikrometer oder von 6 Mikrometer bis 14 Mikrometer oder von 6 Mikrometer bis 12 Mikrometer oder von 8 Mikrometer bis 20 Mikrometer oder von 8 Mikrometer bis 18 Mikrometer oder von 8 Mikrometer bis 16 Mikrometer oder von 8 Mikrometer bis 14 Mikrometer oder von 8 Mikrometer bis 14 Mikrometer oder von 8 Mikrometer bis 12 Mikrometer ist.

4. Ein Vakuumisolierpaneel nach irgendeinem der Ansprüche 2 oder 3, wobei die Umhüllung eine innere Schicht aufweist, und wobei die innere Schicht der Umhüllung ein thermoplastisches Material aufweist, welches ausreichend erweicht, um durch Wärme versiegelt zu werden.

5. Ein Vakuumisolierpaneel nach irgendeinem vorhergehenden Anspruch, wobei die Umhüllung eine innere Schicht aufweist, und wobei die innere Schicht der Umhüllung ein thermoplastisches Material aufweist, welches ausreichend erweicht, um durch Wärme versiegelt zu werden, und wobei das thermoplastische Material aus der Gruppe ausgewählt ist, die aus Polyethylen, einschließlich Polyethylen mit niedriger Dichte (LDPE = Low Density Polyethylene), beispielsweise lineares Polyethylen mit niedriger Dichte (LLDPE = Linear Low Density Polyethylene) und Polyethylen mit ultrahohem Molekulargewicht (UHMWPE = Ultra High Molecular Weight Polyethylene); Polypropylen und Ethylenvinylalkohol (EVOH), Polyvinylidenchlorid (PVDC); thermoplastischen Urethanen; einschließlich Kombinationen davon besteht, welche Copolymere und Mischungen davon aufweisen.

6. Ein Vakuumisolierpaneel nach irgendeinem vorhergehenden Anspruch, wobei die äußere Schicht, die an der Metallfolie vorgesehen ist, ein thermoplastisches Polymer aufweist, welches aus der Gruppe ausgewählt ist, die aus Polyethylen, Polypropylen und Ethylenvinylalkohol oder Copolymeren davon besteht.

7. Ein Vakuumisolierpaneel nach irgendeinem vorhergehenden Anspruch, wobei die innere Schicht der Umhüllung ein Polyethylenmaterial aufweist, wie beispielsweise einen Polyethylenfilm, und wobei die äußere Schicht an der Metallfolie ein Polyethylenmaterial aufweist, wie beispielsweise eine Polyethylenbeschichtung.

8. Ein Vakuumisolierpaneel nach irgendeinem vorhergehenden Anspruch, welches eine Feuchtigkeitsdampfdurchlassrate im Bereich von 1,5 x 10⁻³ g/m²·Tag bis 3,0 x 10⁻³ g/m²·Tag hat, wenn dies gemäß ASTM F1249-90 bei 38 °C mit 100 % relativer Feuchtigkeit gemessen wird.

9. Ein Vakuumisolierpaneel nach irgendeinem vorhergehenden Anspruch, welches eine Sauerstoffdurchlassrate im Bereich von 2 x 10⁻³ cm³/m²·Tag bis 5 x 10⁻³ cm³/m²·Tag hat, und zwar gemessen gemäß ASTM D3985 gemessen bei 23 °C mit 50 % relativer Feuchtigkeit.

10. Ein Verfahren zur Herstellung eines Vakuumisolierpaneels, welches folgende Schritte aufweist:
(a) Vorsehen eines porösen isolierenden Kerns mit einer Oberseite und einer Unterseite und Seiten; wobei der isolierende Kern aus einem isolierendem mikroporösem Pulvermaterial aufgebaut ist, welches aus der Gruppe ausgewählt ist, die aus pyrogenem Siliciumdioxid, ausgeschiedenem Siliciumdioxid, Perlit, Diatomäenerde bzw. Kieselgur oder Kombinationen davon besteht;
(b) Vorsehen von zumindest einer Metallfolie, die eine Dicke von 4 Mikrometern bis 50 Mikrometern hat, die sich über im Wesentlichen die gesamte Oberfläche oder die gesamte Unterseite des Kerns erstreckt, so dass die Folie keine thermische Brücke bzw. Wärmebrücke zwischen der Oberseite und der Unterseite des Kerns bildet; wobei die Metallfolie zumindest eine daran anhaftende äußere thermoplastische Schicht hat;
(c) Vorsehen einer Umhüllung mit einer Innenfläche und einer Außenfläche, wobei die Umhüllung ausgebildet ist, um (i) den Kern und die Metallfolie zu umhüllen, wobei die Metallfolie zwischen der Umhüllung und dem Kern ist, und (ii) ein aufgebrachtes Vakuum in der Umhüllung zu halten;
(d) Anlegen eines Vakuums an die Umhüllung, wobei die Umhüllung eine innere Umhüllungsschicht aufweist;
(e) Anbringen der Metallfolie an einer Innenfläche der Umhüllung durch Aufheizen des Paneels, nachdem das Vakuum angelegt worden ist, um ein Vakuumisolierpaneel mit einer thermischen Leitfähigkeit von 3,0 mW/m·K bis 4,0 mW/m K vorzusehen; und
wobei die zumindest eine Metallfolie aus Edelstahl ist.

11. Ein Verfahren zur Herstellung eines Vakuumisolationspaneels nach Anspruch 10, wobei die innere Schicht der Umhüllung ein Polymer aufweist, welches aus der Gruppe ausgewählt ist, die aus Polyethylen, Polypropylen und Ethylenvinylalkohol oder Copolymeren davon besteht.

12. Ein Verfahren zur Herstellung eines Vakuumisolationspaneels nach Anspruch 10 oder Anspruch 11, wobei die äußere Schicht an der Metallfolie ein Polymer aufweist, welches aus der Gruppe ausgewählt ist, die aus Polyethylen, Polypropylen und Ethylenvinylalkohol oder Copolymeren davon besteht.

13. Ein Verfahren zur Herstellung eines Vakuumisolationspaneels nach irgendeinem der Ansprüche 10 bis 12, wobei die Metallfolie und die Innenseite der Umhüllung aneinander durch Aufheizen des Paneels auf eine Temperatur von zwischen ungefähr 100 und 180 °C, optional für ungefähr 0,5 bis 10 Minuten, angebracht werden.

## Revendications

1. Panneau d'isolation sous vide comprenant :
(a) un noyau isolant poreux ayant une surface supérieure et une surface inférieure et des côtés, dans lequel le noyau isolant est fabriqué à partir d'une poudre en matériau microporeux choisi dans le groupe constitué de la silice pyrogénée, la silice précipitée, la perlite, la terre de diatomées ou leurs combinaisons ;
(b) une enveloppe autour du noyau agencée pour envelopper le noyau et pour maintenir un vide appliqué à l'intérieur de l'enveloppe ;
(c) au moins une feuille métallique ayant une épaisseur comprise entre 4 microns et 50 microns entre l'enveloppe et le noyau et s'étendant sur pratiquement toute la surface du noyau sur la surface supérieure ou la surface inférieure de celui-ci, la feuille ne s'étendant pas aux environs des côtés du noyau isolant, la feuille ne formant pas de pont thermique entre la surface supérieure et la surface inférieure du noyau ; et dans lequel l'enveloppe comprend une couche interne d'enveloppe et la feuille métallique a au moins une couche thermoplastique externe qui y adhère, la couche interne d'enveloppe et la couche externe sur la feuille métallique étant attachées l'une à l'autre en chauffant le panneau après que le vide ait été fait ;
ledit panneau d'isolation sous vide ayant une conductivité thermique comprise entre 3,0 mW/m.K à 4,0 mW/m.K, et
dans lequel l'au moins une feuille métallique est constituée d'un acier inoxydable.

2. Panneau d'isolation sous vide selon la revendication 1, comprenant deux feuilles métalliques, dans lequel une feuille métallique s'étend sensiblement sur toute la surface du noyau sur la surface supérieure et une seconde feuille métallique s'étend sensiblement sur toute la surface du noyau sur la surface inférieure.

3. Panneau d'isolation sous vide selon l'une quelconque des revendications précédentes, dans lequel l'épaisseur d'au moins une feuille métallique est comprise entre 4 microns et 30 microns, ou entre 4 microns et 20 microns, ou entre 4 microns et 18 microns ou entre 4 microns et 16 microns, ou entre 4 microns et 14 microns, ou entre 4 microns et 12 microns, ou entre 6 microns et 20 microns, ou entre 6 microns et 18 microns, ou entre 6 microns et 16 microns, ou entre 6 microns et 14 microns, ou entre 6 microns et 12 microns, ou entre 8 microns et 20 microns, ou entre 8 microns et 18 microns, ou entre 8 microns et 16 microns, ou entre 8 microns et 14 microns, ou entre 8 microns et 12 microns.

4. Panneau d'isolation sous vide selon l'une quelconque des revendications 2 ou 3, dans lequel l'enveloppe comprend une couche interne, la couche interne de l'enveloppe comprenant un matériau thermoplastique qui se ramollit suffisamment pour être thermosoudé.

5. Panneau d'isolation sous vide selon l'une quelconque des revendications précédentes, dans lequel l'enveloppe comprend une couche interne, la couche interne de l'enveloppe comprenant un matériau thermoplastique qui se ramollit suffisamment pour être thermosoudé, et dans lequel le matériau thermoplastique est choisi dans le groupe constitué du polyéthylène, y compris le polyéthylène basse densité (LDPE) par exemple du polyéthylène à basse densité linéaire (LLDPE), et le polyéthylène de masse molaire très élevée (UHMWPE) ; du polypropylène et éthylène-alcool vinylique (EVOH), du polychlorure de vinylidène (PVDC) ; des uréthannes thermoplastiques ; y compris leurs combinaisons incluant leurs copolymères et leurs mélanges.

6. Panneau d'isolation sous vide selon l'une quelconque des revendications précédentes, dans lequel la couche externe prévue sur la feuille métallique comprend un polymère thermoplastique choisi dans le groupe constitué du polyéthylène, du polypropylène et éthylène-alcool vinylique ou de leurs copolymères.

7. Panneau d'isolation sous vide selon l'une quelconque des revendications précédentes, dans lequel la couche interne de l'enveloppe comprend un matériau de polyéthylène tel qu'un film de polyéthylène, la couche externe sur la feuille métallique comprenant un matériau de polyéthylène tel qu'un revêtement de polyéthylène.

8. Panneau d'isolation sous vide selon l'une quelconque des revendications précédentes, ayant un coefficient de transmission de vapeur humide dans la plage allant de 1,5 x 10⁻³ g/m².jour à 3,0 x 10⁻³ g/m².jour mesuré selon la norme ASTM F1249-90 à 38°C avec 100% d'humidité relative.

9. Panneau d'isolation sous vide selon l'une quelconque des revendications précédentes, ayant un taux de transmission d'oxygène dans la plage allant de 2 x 10⁻³ cc/m².jour à 5 x 10⁻³ cc/m².jour mesuré selon la norme ASTM D3985 prise à 23°C avec 50% d'humidité relative.

10. Procédé de fabrication d'un panneau d'isolation sous vide comprenant les étapes consistant à :
(a) fournir un noyau isolant poreux ayant une surface supérieure et une surface inférieure et des côtés ; dans lequel le noyau isolant est fabriqué à partir d'une poudre en matériau microporeux choisi dans le groupe constitué de la silice pyrogénée, la silice précipitée, la perlite, la terre de diatomées ou leurs combinaisons ;
(b) prévoir au moins une feuille métallique ayant une épaisseur comprise entre 4 microns et 50 microns qui s'étend sur pratiquement toute la surface supérieure ou toute la surface inférieure du noyau, de sorte que la feuille ne forme pas de pont thermique entre la surface supérieure et la surface inférieure du noyau ; la feuille métallique ayant au moins une couche thermoplastique externe qui y adhère ;
(c) fournir une enveloppe ayant une surface interne et une surface externe, l'enveloppe étant agencée pour : (i) envelopper le noyau et la feuille métallique avec la feuille métallique entre l'enveloppe et le noyau, et (ii) maintenir un vide appliqué dans l'enveloppe ;
(d) appliquer un vide à l'enveloppe ; l'enveloppe comprenant une couche interne d'enveloppe ;
(e) attacher la feuille métallique à une surface interne de l'enveloppe en chauffant le panneau après que le vide ait été fait pour fournir un panneau d'isolation sous vide ayant une conductivité thermique comprise entre 3,0 mW/m.K à 4,0 mW/m.K ;
dans lequel l'au moins une feuille métallique est constituée d'un acier inoxydable.

11. Procédé de fabrication d'un panneau d'isolation sous vide selon la revendication 10, dans lequel la couche interne de l'enveloppe comprend un polymère choisi dans le groupe constitué du polyéthylène, du polypropylène et éthylène-alcool vinylique ou de leurs copolymères.

12. Procédé de fabrication d'un panneau d'isolation sous vide selon la revendication 10 ou la revendication 11, dans lequel la couche externe sur la feuille métallique comprend un polymère choisi dans le groupe constitué du polyéthylène, du polypropylène et éthylène-alcool vinylique ou de leurs copolymères.

13. Procédé de fabrication d'un panneau d'isolation sous vide selon l'une quelconque des revendications 10 à 12, dans lequel la feuille métallique et la surface interne de l'enveloppe sont attachées l'une à l'autre en chauffant le panneau à une température comprise entre environ 100 et 180 degrés Celsius éventuellement pendant environ 0,5 à 10 minutes.
